# EUROPEAN PATENT APPLICATION

(11) **EP 1 217 851 A1**
(43) Date of publication of application: **26.06.2002**
(21) Application number: 01310585.3
(22) Date of filing: 19.12.2001
(51) Int. Cl.: H04Q 7/32

(54) **Channel selection procedure for mobile communication devices**

(30) Priority: 21.12.2000 GB 0031174
(71) Applicant: Pace Micro Technology PLC, Saltaire, Shipley, BD18 3LF (GB)
(72) Inventor: Johnson, Graham, Leeds LS20 8JR (GB)
(74) Representative: Wood, Graham

(57) **Abstract**

A method of controlling a mobile communication device, such as a mobile telephone, to operate at or over one or more pre-determined frequency values or ranges depending on the geographical location. The method includes the steps of determining where the mobile communication device is in terms of geographical location using GSM network information, identifying frequency values or ranges available in the geographical location at which the device can operate and configuring the mobile communication device to operate at one of the identified frequency values or ranges.

## Description

This invention relates to the selection of a frequency of operation for Mobile Communication devices which utilise a communication system such as, but not necessarily exclusively, the system known as "Bluetooth" (RTM.)

Mobile Communication Devices are increasingly widespread and one form of communication system, which is increasingly being utilised, is the Bluetooth system. This system allows the transmission of data between devices in a particular range using specific frequencies of transmission at which the devices can communicate/operate. It is also important to note that Bluetooth devices must use the same set of frequencies in order for the two devices to communicate together. Typically the frequency channel used is from a list of available channels and is determined by a pseudo random "hopping sequence" controller until an appropriate and available channel is selected.

A problem arises however, in that if the devices are required to be used in different countries, frequencies which can be used in one country may not be permissible for use in other countries. This means that while a frequency may be available for use in one country, the same frequency may be illegal in another country.

Currently, devices which utilise Bluetooth use frequency hopping techniques over a defined set of frequencies. These frequencies vary depending on the country of operation. Typically, 79 possible frequencies are in theory available, but some of the 79 frequencies are used by incumbent services like military and emergency services in countries such as France, Spain, Japan. In these countries it is typical that 23 of the channels are used but, to further complicate matters different groups of 23 channels are used in different countries.

Unlike other fixed frequency systems such as IEEE802.11 or HomeRF where the devices are country-coded and hence fixed on a set of frequencies which can be used in that country, Bluetooth-enabled mobile phones can easily cross borders with their users and, as such, at the present time the user has to reconfigure the device to use the correct set of frequencies for each country.

In the first instance, this is impractical, but also, and perhaps more critically, if the user forgets to make this adjustment then the device can potentially use illegal frequencies and cause jamming to critical services, and/or lead to prosecution of the unwitting user.

The aim of the present invention is therefore to provide a method of controlling the frequencies used by Bluetooth enabled devices with respect to local operating conditions.

According to a first aspect of the present invention there is provided a method of controlling a mobile communication device to operate at or over one or more pre-determined frequency values or ranges depending on the geographical location, characterised in that said method includes the steps of determining where the mobile communications device is in terms of geographical location using the global system for mobile communication (GSM) network or similar information, identifying frequency values or ranges available and/or permitted in said determined geographical location and configuring said mobile communication device to be able to operate at said identified frequency value or ranges.

Preferably one frequency value or range is selected for operation of the device.

Preferably the configuration is performed with respect to the frequency values stored in memory of the device at which the device can operate and with respect to specified and identifiable geographical locations.

Typically, mobile phone network cell identification data can be used by the device software to determine where the device is at any time (geographically). With this information the software can then automatically configure the device to select either of a 79 or 23-channel hop sequence and, in turn specify a specific channel hop sequence for the correct group of channels for the geographical location.

In one embodiment, the device can contain a look-up table in the memory which correlates cell-Ids to country-codes or other geographical regions. Alternatively the mobile network may directly transmit a country-code to the device, which typically requires less local memory in the device. The network can then transmit the appropriate data once the geographical location is identified.

According to a second aspect of the present invention there is provided a mobile communication device having means to operate at or over one or more pre-determined frequency values or ranges depending on the geographical location, characterised in that said device determines the geographical location using GSM network or similar information, identifies frequency values or ranges available and/or permitted in said determined geographical location and configures said device to operate at said identified frequency values or ranges.

A specific embodiment of the invention is now described with reference to the accompanying drawings, wherein:-

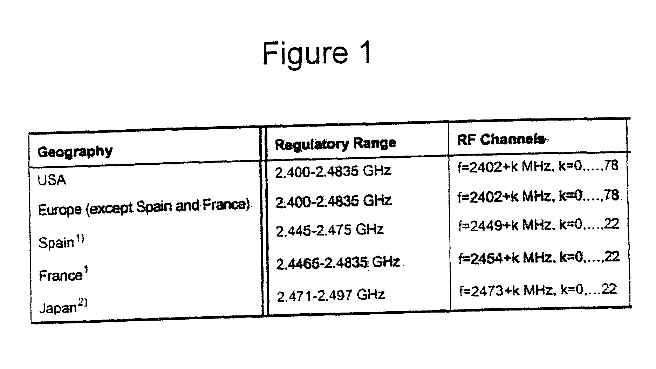

Figure 1 illustrates example of channel frequencies used for various countries.

In the use of Bluetooth or an equivalent communication system a specific frequency range is allocated for operation. In the case of the Bluetooth system this operates in the 2.4GHz ISM band and, although globally available, the exact location and permitted usage of the band varies from country to country.

Operating bands for a number of different geographical locations, in this case on a country by country basis, are identified and illustrated in Figure 1. For example, in the US and most European countries a band of 83.5 MHz width is available and in this band, 79 RF channels (k) spaced 1MHz apart are defined.

However in Spain, France and Japan, a smaller band width is available and is located within the ISM band. In the available band 23 RF channels (k), spaced 1MHz apart, are defined but the 23 bands which are defined are not in the same location for each country as the location of the band can vary.

Thus in order to achieve a communication channel between two devices, a pseudo random hopping sequence is used to move through the 79 or 23 channels to select an appropriate channel for use. In order to do this the channel is divided into slots where a different hop frequency is used for each slot and the hop rate for Bluetooth systems is 1600 hops per second. One packet of data can be transmitted per slot and subsequent slots are subsequently used for transmitting and receiving and this results in a Time Division Duplex (TDD) scheme. Two or more units sharing the same channel form a piconet where one unit acts as a master controlling the piconet and the other units act as slaves.

The frequency hop channel which is selected is determined by the frequency hop sequence and by the phase in the sequence. In the Bluetooth system the sequence is determined by the identity of the piconet master and the phase is determined by the master unit's clock system. The repetition interval of the frequency hop is relatively long at typically 23 hours or more.

Thus in accordance with the invention the frequency hop sequence which is selected to be used is selected in relation to the geographical location of the device which is first detected in accordance with the invention.

Typically 10 selectable hopping sequences are defined in accordance with the invention for selective use with respect to the detected geographical location of the device, five for the 79 channel hop sequence and 5 for the 23 channel hop sequence.

Thus, in a practical example of the invention, a user of a mobile device such as a mobile telephone, purchases the device in a first country. The device is Bluetooth enabled thus allowing the same to be utilised with a Bluetooth communication system and other enabled devices within a certain area.

In the country of purchase it is unlikely that the user will experience any problem as the device will be sold to be operable in the frequency range channels permitted in the country of purchase. However it should be noted that the invention as herein described could be utilised to provide the initial set-up frequency channels of operation for the first country at the time of purchase.

In any case, if the user moves with the device to another geographical location, and in particular to a second country, there is a risk that the operating frequency previously used is illegal or otherwise prevented in the second country. In accordance with the invention, the GSM cell location for the device is identified at intervals of use and at the first time of operation of the device at a new geographical location this is sensed. Once the location is identified by the device control system or the GSM network, if the location requires a different frequency channel operating sequence to the location of previous use, the operating characteristics in terms of the selection of an appropriate channel hop sequence for that geographical location can be adjusted accordingly.

Thus the invention ensures that Bluetooth enabled devices and other devices enabled for use at particular frequencies in particular countries in general, are using the correct frequencies as set out by local geographical and/or country regulations and avoids the illegal use of frequencies in those geographical locations or countries.

In preferred embodiments the invention is transparent to the device user inasmuch that automatic selection of the appropriate sequence from the possible 79 or 23 channel hopping sequences is made for the specific location. Furthermore the selection can be made without need for user intervention or set-up.

## Claims

1. A method of controlling a mobile communication device to operate at or over one or more pre-determined frequency values or ranges depending on the geographical location **characterised in that** said method includes the steps of determining where the mobile communication device is in terms of geographical location using the global system for mobile communications (GSM) network or similar information, identifying frequency values or ranges available in and/or permitted in said determined geographical location and configuring said mobile communication device to be able to operate at said identified frequency values or ranges.

2. A method according to claim 1 **characterised in that** one frequency value or range is selected for operation of said mobile communication device.

3. A method according to claim 1 **characterised in that** the frequency value or range to which the device is configured corresponds to a frequency value or range stored in memory of the device at which the device can operate.

4. A method according to claim 3 **characterised in that** a look-up table is contained in said memory which correlates cell Ids to country codes or other geographical locations.

5. A method according to claim 1 **characterised in that** mobile phone network cell identification data is used by software in the device to determine the geographical location.

6. A method according to claim 5 **characterised in that** the mobile network directly transmits a country code to the device and/or the appropriate frequency data for the country or geographical location identified.

7. A method according to claim 1 **characterised in that** software in the device configures the device to select either a 79 or a 23 channel hop sequence and then specifies a specific channel hop sequence for the correct group of channels for the determined geographical location.

8. A method according to claim 7 **characterised in that** ten selectable hopping sequences are defined for selective use with the determined geographical location.

9. A method according to claim 8 **characterised in that** five of the selectable hopping sequences are used for the 79 channel hop sequence and five for the 23 channel hop sequence.

10. A method according to claim 1 **characterised in that** the mobile communication device utilises the Bluetooth system.

11. A method according to claim 1 **characterised in** the mobile communication device is a mobile telephone.

12. A mobile communication device having means to operate at or over one or more pre-determined frequency values or ranges depending on the geographical location, **characterised in that** said device determines the geographical location using GSM network or similar information, identifies frequency values or ranges available and/or permitted in said determined geographical location and configures said device to be able to operate at said identified frequency values or ranges.

13. A device according to claim 12 **characterised in that** one frequency range or value is selected for operation of said device.

14. A device according to claim 12 **characterised in that** said device is a Bluetooth device.

15. A device according to claim 12 **characterised in that** said device is a mobile telephone.
